(19) Europäisches Patentamt / European Patent Office / Office européen des brevets

(11) **EP 2 088 560 A1**

(12) **DEMANDE DE BREVET EUROPEEN**

(43) Date de publication:
**12.08.2009 Bulletin 2009/33**

(51) Int Cl.:
*G06T 17/20* (2006.01)

(21) Numéro de dépôt: **08173122.6**

(22) Date de dépôt: **30.12.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **11.02.2008 FR 0800728**

(71) Demandeur: **Newscape Technology
22300 Lannion (FR)**

(72) Inventeurs:
• **Klaine, Luc
22300 Lannion (FR)**
• **Thouvenin, Olivier
22300 Lannion (FR)**

(74) Mandataire: **Cabinet Plasseraud
52, rue de la Victoire
75440 Paris Cedex 09 (FR)**

(54) **Trace de surface tridimensionnelle par un terminal mobile**

(57) Procédé de tracé selon des axes X, Y et Z d'une surface tridimensionnelle (R) comportant des mailles (M1) définies par des sommets respectifs (O1 O2, O3, O4), un périmètre d'une maille étant délimité par des segments reliant successivement lesdits sommets, ledit procédé comprenant les étapes suivantes :
a/ pour au moins une première maille (M1), on détermine au moins un sommet additionnel (06), ledit sommet additionnel étant un sommet d'une seconde maille (M2), distinct des sommets de la première maille, tel que dans le plan défini par les axes X et Y, le sommet de la deuxième maille est situé sur le périmètre de la première maille ;
b/ on décompose au moins une partie de la première maille en au moins un ensemble ordonné de triangles, les sommets desdits triangles étant déterminés en fonction des sommets de la première maille et du sommet additionnel;
c/ on trace la surface en fonction d'au moins lesdits triangles de l'ensemble ordonné de triangles.

FIG.8.

EP 2 088 560 A1

## Description

La présente invention concerne le domaine des applications de tracé de surface tridimensionnelle de type image filaire.

Elle est plus particulièrement adaptée aux applications embarquées, par exemple de cartographie numérique, sur des terminaux mobiles, par exemple des téléphones portables, assistant personnel numérique ou PDA etc.

De telles applications sont par exemple mises en oeuvre dans des terminaux mobiles aptes à communiquer avec un serveur. Lors d'une première communication, le terminal mobile transmet sa position courante au serveur.

Puis le serveur délimite une portion de modèle numérique de terrain centré sur la position courante transmise et la décompose successivement en un certain nombre de représentations, par exemple égal à r, correspondant à r niveaux de précision ou résolution différents. Cette détermination des représentations correspondant aux différents niveaux de précision est par exemple mise en oeuvre à l'aide du processus de réduction triangulaire décrit dans la demande de brevet française FR 06 52 812.

Quelque soit le niveau de résolution, la surface tridimensionnelle, correspondant à la portion du modèle numérique de terrain délimitée par le serveur, est définie par un nombre fini de mailles. Chaque maille est définie par les coordonnées dans un référentiel $(X, Y, Z)$ de ses sommets $S(n,m,z)$. Les coordonnées dont par exemple de type latitude, longitude et altitude.

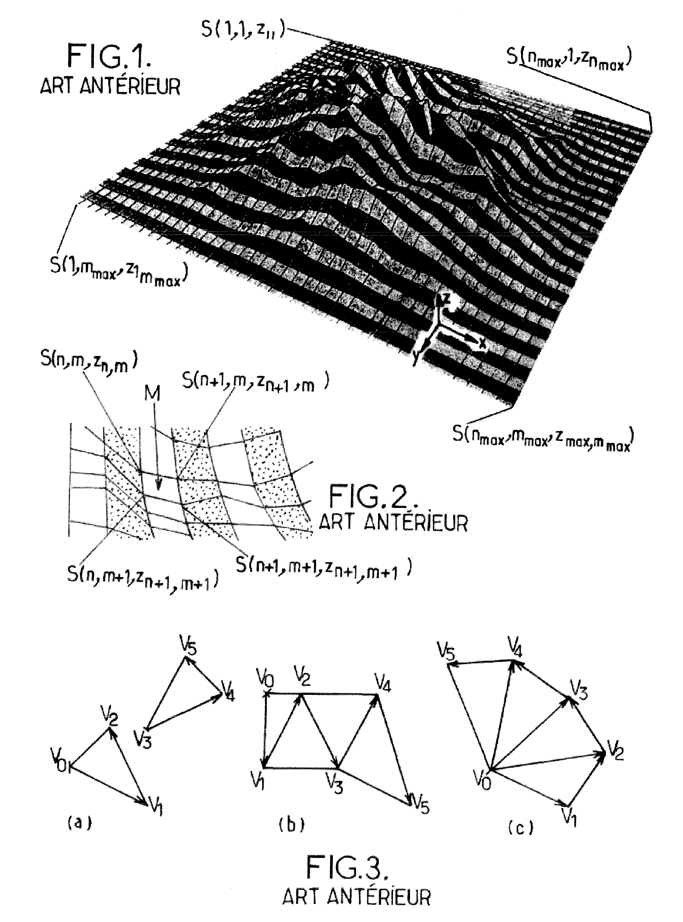

En figure 1 figure la représentation R0 d'une surface tridimensionnelle correspondant au niveau de résolution le plus important (niveau 0) parmi les r niveaux. Dans le cas décrit, les mailles sont carrées dans le plan $(X,Y)$, $n$ et $m$ sont des valeurs discrètes régulières et $z$ prend des valeurs quelconques. La représentation F0 de la surface tridimensionnelle est définie par les sommets $S(n, m, Z_{n,m})$ pour $n= 1$ à $n_{max}$ et $m=1$ à $m_{max}$.

Par la suite, on nomme $S[n,m]$ le sommet $S(n, m, z_{n,m})$.

La représentation R0 de la surface tridimensionnelle est définie plus particulièrement par les mailles dont le périmètre est composé des segments $S[n,m]S[n+1,m]$, $S[n+1,m]S[n+1,m+1]$, $S[n+1,m+1]S[n,m+1]$ et $S[n,m+1]S[n, m]$ pour $n= 1$ à $n_{max}-1$ et $m=1$ à $m_{max}-1$. Une telle maille M est représentée en figure 2.

La représentation R1 de la surface tridimensionnelle correspondant au niveau de résolution -1 immédiatement inférieur au niveau 0 est définie par des mailles dont les sommets sont un sous-ensemble des sommets $\{S[n, m]$ avec $n= 1$ à $n_{max}$ et $m=1$ à $m_{max}\}$.

Par exemple, la représentation R1 est définie par les mailles dont le périmètre est composé des segments $S[2n,2m]S[2(n+1),2m]$, $S[2(n+1),2m]S[2(n+1),2(m+1)]$, $S[2(n+1),2(m+1)]S[2n,2(m+1)]$ et $S[2n,2(m+1)]$

$S[2n, 2m]$ pour $n= 1$ à $E(\dfrac{n_{max}-1}{2})$ et $m=1$ à

$E(\dfrac{m_{max}-1}{2})$, ou $E()$ représente la partie entière.

La représentation R2 de la surface tridimensionnelle correspondant au niveau de résolution -2, immédiatement inférieur au niveau -1, est définie par les mailles dont les sommets sont un sous-ensemble des sommets considérés dans la représentation R1. Par exemple, la représentation R2 est définie par les mailles dont le périmètre est composé des segments $S[4n,4m]$ $S[4(n+1),4m]$, $S[4(n+1),4m]S[4(n+1),4(m+1)]$, $S[4(n+1),4(m+1)]S[4n,4(m+1)]$ et $S[4n,4(m+1)]S[4n, 4m]$

pour $n= 1$ à $E(\dfrac{n_{max}-1}{4})$ et $m=1$ à $E(\dfrac{m_{max}-1}{4})$,

ou $E()$ représente la partie entière.

Une fois que le serveur a déterminé les différentes représentations correspondant aux r différents niveaux de précision de la portion délimitée, il transmet généralement au terminal mobile les données de définition de ces r représentations, comprenant les coordonnées de sommets des mailles et un indice de texture ou couleur affecté à chaque maille considérée.

Le terminal mobile exploite ensuite ces données reçues en fonction de la précision souhaitée indiquée par l'utilisateur du terminal mobile.

Par exemple, l'utilisateur indique qu'il souhaite visualiser la représentation R0, correspondant au niveau de résolution le plus important (niveau 0). Le terminal trace alors les $(n_{max}-1)*(m_{max}-1)$ mailles considérées dans la représentation R0 dans la couleur ou texture qui leur a été respectivement affectée.

Si l'utilisateur décide de visualiser la représentation R1, correspondant au niveau de visualisation -1, le terminal trace les $E(\dfrac{n_{max}-1}{2})*E(\dfrac{m_{max}-1}{2})$

mailles considérées dans la représentation R1 dans la couleur ou texture qui leur a été respectivement affectée.

Certaines applications dans des terminaux mobiles permettant de tracer des surfaces tridimensionnelles, par exemple les interfaces de programmation (API) graphiques 3D, sont conçues pour réaliser des tracés uniquement à partir de triangles en « strip ».

Sur la figure 3 sont représentés différents types de tracés de surfaces à partir de triangles. Dans tous les cas, les surfaces sont définies à l'aide de la suite ordonné de sommets (V0, V1, V2, V3, V4, V5).

Dans le cas (a) de la figure 3, le tracé est basé sur des triangles « par 3 ». Dans un tel cas, à partir de la suite de sommets (V0, V1, V2, V3, V4, V5), un premier triangle (V0, V1, V2) est tracé, puis un second triangle (V3, V4, V5).

Dans le cas (b) de la figure 3, le tracé est basé sur des triangles « en strip ». Dans un tel cas, à partir de la suite de sommets (V0, V1, V2, V3, V4, V5), un premier triangle (V0, V1, V2) est tracé, puis un second triangle (V1, V2, V3), puis un troisième triangle (V2, V3, V4), puis un quatrième triangle (V3, V4, V5). Chaque triangle de cet ensemble ordonné de triangles, à compter du deuxième triangle selon l'ordre de l'ensemble ordonné de triangles, comporte ainsi deux sommets du triangle précédent et un nouveau sommet distinct des sommets des triangles précédents.

Dans le cas (c) de la figure 3, le tracé est basé sur des triangles « en fan». Dans un tel cas, à partir de la suite de sommets (V0, V1, V2, V3, V4, V5), un premier triangle (V0, V1, V2) est tracé, puis un second triangle (V0, V2, V3), puis un troisième triangle (V0, V3, V4), puis un quatrième triangle (V0, V4, V5).

Dans le cas d'un échange avec un terminal mobile ne réalisant des tracés qu'à partir de triangles en « strip », le serveur décompose les mailles d'une représentation d'une surface tridimensionnelle en triangles en « strip », les sommets de ces triangles étant les sommets des mailles.

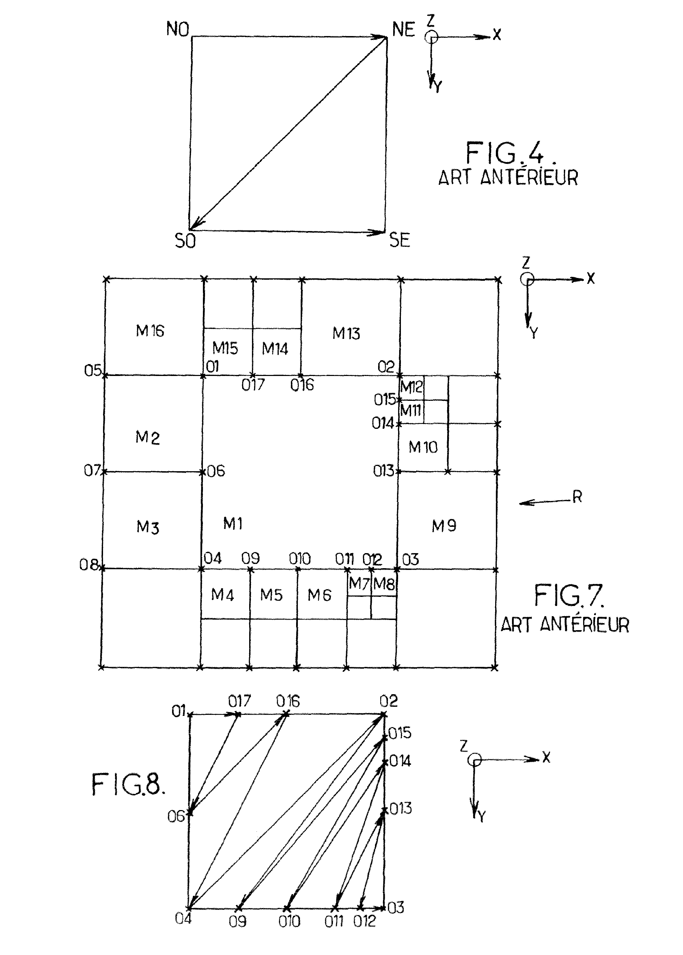

Ainsi, pour une maille carrée définie par ses quatre sommets NO, NE, SO, SE, représentée en figure 4 dans le plan (X, Y), les données de définition de la maille transmises par le serveur au terminal mobile comprennent la suite ordonnée de sommets (NO, NE, SO, SE) identifiés par leurs coordonnées respectives dans le référentiel (X, Y, Z).

A partir de cette suite ordonnée de sommets et des coordonnées de ceux-ci, le terminal mobile, adapté pour tracer des triangles en « strip », effectue le tracé du triangle (NO, NE, SO), puis celui du triangle (NE, SO, SE). Pour tracer un triangle, le terminal mobile dessine en fait la partie du plan passant par les 3 sommets du triangle et interne au triangle. Puis il applique, le cas échéant, au triangle ainsi tracé la texture ou couleur affectée à la maille à laquelle appartient le triangle.

Dans des cas, toutes les mailles définissant une représentation d'une surface tridimensionnelle correspondant à un niveau de précision donné transmise par le serveur sont de même taille. Dans les exemples donnés ci-dessus, la taille de toutes les mailles est de 1*1 au niveau 0, de 2*2 au niveau -1, de 4*4 au niveau -2.

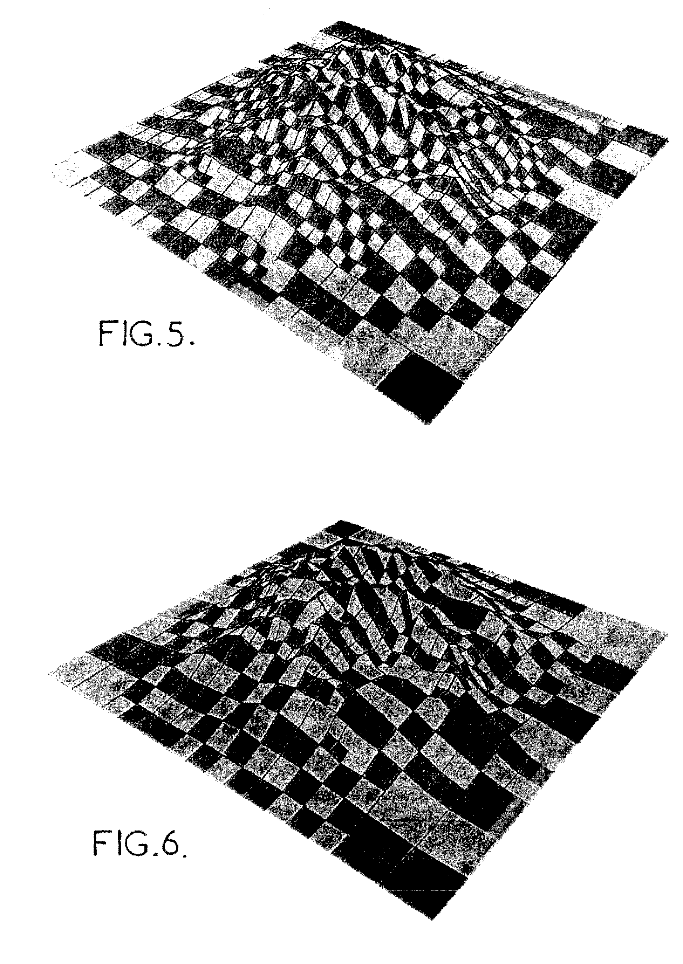

Dans certains cas, les serveurs sont adaptés pour définir au moins une représentation d'une surface tridimensionnelle correspondant à un niveau de précision donné, en fonction de mailles de dimensions variées (cf. par exemple la surface tridimensionnelle représentée en figure 5 à un niveau de précision donné et en figure 6 à un niveau de précision inférieur au niveau de précision de la figure 5). Les tailles des mailles sont déterminées en fonction des variations de relief. Cette disposition permet de diminuer significativement le nombre de sommets nécessaires à la définition de la représentation, par rapport aux cas précédents, et donc le volume des données à transmettre. Cette disposition permet en outre de diminuer la quantité de données utilisées pour le tracé et par conséquent d'en accroître la fluidité.

Considérons la représentation d'une surface tridimensionnelle représentée en figure 7 dans le plan (X, Y). Elle comporte ainsi des mailles de tailles différentes, la maille M1 est 16 fois plus grande que la maille M4 qui lui est adjacente et 4 fois plus grande que les mailles M2 ou M3 qui lui sont adjacentes.

Comme décrit précédemment, pour tracer la maille M1 définie par la suite ordonnée de sommets (O1, O2, 03, 04) et par les coordonnées de ceux-ci transmises par le serveur, le terminal mobile, adapté pour tracer des triangles en « strip », effectue le tracé du triangle (01, 02, 04), puis celui du triangle (02, 04, 03).

Pour tracer la maille M2 définie par la suite ordonnée de sommets (05, O1, 07, 06) et par les coordonnées de ceux-ci transmises par le serveur, le terminal mobile effectue le tracé du triangle (O5, O1, 07), puis celui du triangle (O1, O7, O6).

De même, pour tracer la maille M3 définie par la suite ordonnée de sommets (07, 06, 08, 04) et par les coordonnées de ceux-ci transmises par le serveur, le terminal mobile le tracé du triangle (07, 06, 08), puis celui du triangle (06, 08, 04).

Rien ne garantit que les bords de la maille M1 ainsi tracée dans l'espace tridimensionnel (X, Y, Z) par le terminal mobile à l'aide des deux triangles (O1,O2,O4) et (02, 04, 03) passent par le sommet 06 des mailles M2, respectivement M3, tracées à partir des deux triangles (05, 01, 07) et (01, 07, 06), respectivement à partir des deux triangles (07, 06, 08) et (06, 08, 04).

Ainsi si le sommet 06 ne figure pas sur le segment 0104 du périmètre de la maille M1, un trou apparaît à la jonction de la maille M1 avec les mailles M2 et M3.

Ainsi le tracé d'une représentation d'une surface tridimensionnelle comportant des mailles de tailles différentes peut donner lieu à l'apparition de trous entre des mailles adjacentes de tailles différentes.

Par exemple dans le cas représenté en figure 7, des trous peuvent apparaître entre la maille M1 et les mailles adjacentes M2 à M15, dégradant la qualité et la lisibilité de la surface tridimensionnelle tracée.

La présente invention vise à proposer une solution permettant d'améliorer le tracé de surfaces tridimensionnelles, en diminuant notamment les défauts liés aux trous apparaissant dans l'art antérieur entre des mailles adjacentes de tailles différentes.

Suivant un premier aspect, l'invention propose un procédé de tracé selon des axes X, Y et Z d'une surface tridimensionnelle comportant des mailles définies par des sommets respectifs, un périmètre d'une maille étant délimité par des segments reliant successivement lesdits sommets, ledit procédé comprenant les étapes suivantes :

a/ pour au moins une première maille, on détermine au moins un sommet additionnel, ledit sommet additionnel étant un sommet d'une seconde maille, distinct des sommets de la première maille, tel que dans le plan défini par les axes X et Y, le sommet de la deuxième maille est situé sur le périmètre de la première maille ;

b/ on décompose au moins une partie de la première maille en au moins un ensemble ordonné de triangles, les sommets desdits triangles étant déterminés en fonction des sommets de la première maille et du sommet additionnel;

c/ on trace la surface en fonction d'au moins lesdits triangles de l'ensemble ordonné de triangles.

Un tel procédé permet de diminuer, voire de supprimer, l'occurrence des phénomènes de trous apparaissant au niveau des jonctions entre mailles adjacentes de tailles différentes lorsque les mailles sont tracées par un terminal mobile à partir de triangles.

Dans un mode de réalisation, chaque triangle de l'ensemble ordonné de triangles, à compter du deuxième triangle selon l'ordre de l'ensemble ordonné de triangles, comporte deux sommets du triangle précédent et un nouveau sommet distinct des sommets des triangles précédents. Cette disposition permet de mettre en oeuvre un procédé selon l'invention au sein de terminaux mobiles mettant en oeuvre des tracés de surface tridimensionnelle en fonction de triangles en « strip ».

Dans un mode de réalisation, on réalise les étapes suivantes,

- on détermine une pluralité de sommets additionnels de la première maille, lesdits sommets additionnels étant les sommets des mailles de la surface vérifiant les contraintes indiquées à l'étape a/ ; et

- les sommets des triangles de l'ensemble ordonné de triangles étant déterminés en fonction des sommets de la première maille et des sommets additionnels déterminés de la première maille.

Un tel procédé permet de supprimer l'occurrence des phénomènes de trous apparaissant au niveau des jonctions entre mailles adjacentes de tailles différentes lorsque les mailles sont tracées par un terminal mobile à partir de triangles.

L'invention propose en outre, dans des modes de réalisation, le tracé d'une zone de délimitation entre les mailles, appelée aussi « wireframe ». Ce tracé peut être réalisé par le mobile à partir des données de définition des mailles transmises par le serveur. L'insertion d'une telle zone de délimitation permet une meilleure visualisation du relief de la surface tridimensionnelle par l'utilisateur du terminal mobile.

Dans un mode de réalisation nommé « tracé de la zone de délimitation par encadrement des mailles », on décompose une portion de surface tridimensionnelle située entre la première maille et la première maille réduite en un autre ensemble ordonné de triangles, chaque sommet ou sommet additionnel de la première maille et de la première maille réduite étant le sommet d'au moins un triangle dudit autre ensemble ordonné de triangles ; et on trace ladite portion de surface tridimensionnelle en fonction d'au moins lesdits triangles de l'ensemble ordonné de triangles et de l'autre ensemble ordonné de triangles. Cette disposition a pour effet d'éviter l'apparition de trous entre une maille réduite tracée et la zone de délimitation tracée autour de la maille réduite.

Dans un mode de réalisation, chaque triangle de l'autre ensemble ordonné de triangles, à compter du deuxième triangle, comporte deux sommets du triangle précédent et, jusqu'à l'antépénultième triangle selon l'ordre de l'ensemble ordonné de triangles, un nouveau sommet distinct des sommets des triangles précédents, les sommets de chaque triangle étant des sommets ou sommets additionnels de la première maille et de la première maille réduite, chaque triangle comportant un sommet égal à un sommet ou sommet additionnel de la première maille et un autre sommet égal au sommet ou sommet additionnel de la maille réduite défini en fonction dudit sommet ou sommet additionnel de la première maille. Cette disposition permet la mise en oeuvre du mode de tracé considéré ci-dessus de la zone de délimitation par des terminaux mobiles effectuant des tracés en fonction de triangles en « strip ».

Dans un mode de réalisation nommé « tracé de la zone de délimitation par quadrillage des mailles », on trace une portion de surface tridimensionnelle située entre des mailles réduites définies à partir de mailles respectives en décomposant ladite portion en un ensemble de polygones reliant les sommets et sommets additionnels des mailles réduites en mettant en oeuvre les étapes suivantes :

- on affecte une valeur à un sommet d'une maille en fonction de la configuration du sommet par rapport à la maille et on met à jour ladite valeur en fonction de la configuration du sommet par rapport à une ou plusieurs autres mailles lorsque ledit sommet est en outre un sommet de ladite ou lesdites autres mailles ;

- on identifie un sommet de chacune de N mailles réduites, avec N entier compris entre 2 et 4, lesdits N sommets ayant été définis en fonction d'un sommet commun aux N mailles en fonction desquelles ont été définies les N mailles réduites et on détermine ledit ensemble de polygones en fonction au moins de portions de polygone reliant lesdits N sommets des N mailles réduites et déterminées en fonction de la valeur affectée au sommet commun.

Cette disposition a également pour effet de d'éviter l'apparition de trous entre une maille réduite tracée et la zone de délimitation tracée autour de la maille réduite.

Suivant un second aspect, l'invention propose un terminal adapté pour mettre en oeuvre les étapes d'un procédé suivant le premier aspect de l'invention.

Suivant un troisième aspect, l'invention propose un programme d'ordinateur à installer dans un terminal, ledit programme comprenant des instructions pour mettre en oeuvre les étapes d'un procédé suivant le premier aspect de l'invention lors d'une exécution du programme par des moyens de traitement dudit terminal.

D'autres caractéristiques et avantages de l'invention apparaîtront encore à la lecture de la description qui va suivre. Celle-ci est purement illustrative et doit être lue en regard des dessins annexés sur lesquels :

- la figure 1 représente les mailles d'une représentation d'une surface tridimensionnelle ;
- la figure 2 représente une maille et ses quatre sommets ;
- la figure 3 représente différents types de tracés de surfaces à partir de triangles ;
- la figure 4 représente le tracé d'une maille à l'aide de deux triangles en strip ;
- la figure 5 représente la surface tridimensionnelle représentée en à un niveau de précision donné à l'aide de mailles de tailles différentes ;
- la figure 6 représente la surface tridimensionnelle de la figure 5 représentée, à l'aide de mailles de tailles différentes, à un niveau de précision inférieur au niveau de précision de la représentation de la figure 5 ;
- la figure 7 représente dans le plan (X, Y) des mailles de tailles différentes d'une surface tridimensionnelle ;
- la figure 8 représente le tracé d'une maille dans un mode de réalisation de l'invention ;
- la figure 9 représente, dans le plan (X, Y) l'insertion d'une zone de délimitation dans une surface tridimensionnelle ;
- la figure 10 représente le tracé d'une zone de délimitation dans un mode de réalisation de type « tracé par encadrement de maille » ;
- la figure 11a représente des sommets dans différentes configurations ;
- la figure 11b représente des valeurs affectées dans un mode de réalisation aux sommets des différentes configurations de la figure 11a;
- les figures 11c à 11e représentent des portions de polygones définies dans un mode de réalisation de type « tracé par quadrillage de maille » en fonction des valeurs affectées et représentées en figure 11b ;
- les figures 12a, 12b, 12c représentent le tracé des lignes respectivement horizontales, verticales et des bords extérieurs d'une zone de délimitation dans un mode de réalisation de type « tracé par quadrillage de maille » ;
- la figure 13 illustre un mode de réalisation d'une décomposition d'une maille en triangles en « strip » selon l'invention.

Un terminal mobile, après avoir communiqué à un serveur sa position courante, reçoit r représentations d'une même portion de modèle numérique de terrain correspondant à r niveau de précision différents. L'utilisation ayant indiqué le niveau de précision souhaité, le terminal mobile exploite les données de définition de la représentation R correspondant au niveau de précision indiqué, ladite représentation de la portion de modèle numérique étant représentée en figure 7.

Ces données de définition comprennent notamment la définition des mailles M1 à M16 représentées dans le plan (X, Y) en figure 7. Certaines des mailles M1 à M16 sont de tailles différentes.

Chaque maille est définie dans les données de définition par ses quatre sommets et les coordonnées dans le référentiel (X, Y, Z) de ces sommets.

Par exemple, dans les données de définitions de la maille M1 reçues par le terminal mobile figurent la liste ordonnée (O1, 02, 04, 03) définissant les triangles en « strip » (01, 02, 04) et (02, 04, 03) ainsi que les coordonnées des sommets O1, 02, O3, 04.

Le terminal mobile a reçu du serveur des données similaires pour la définition de chaque maille M2 à M16.

Le terminal mobile comprend une interface graphique adaptée pour tracer en 3D des surfaces à l'aide de triangles en « strip » qui lui sont indiqués par la suite ordonnée des sommets de ces triangles comme indiqué précédemment et des moyens de traitement pour mettre en oeuvre les étapes indiquées ci-dessous, lors d'une exécution sur ces moyens de traitement, d'un programme d'ordinateur comprenant des instructions.

**Tracé des mailles d'une représentation d'une portion de modèle numérique de terrain:**

Identification de sommets additionnels des mailles :

Dans un mode de réalisation, le terminal est adapté pour identifier les sommets des mailles adjacentes à la maille M1 distincts des sommets de la maille M1 tels que dans le plan (X, Y), ces sommets sont situés sur le périmètre de la maille M1, ledit périmètre étant défini par les segments O1O2,O1O4, 02, 03 et 0304.

En référence à la figure 7, le terminal mobile identifie ainsi le sommet 017 des mailles M15 et M14 et le sommet O16 des mailles M14 et M13, lesdits sommets 017 et 016 étant situés, dans le plan (X,Y), sur le segment O1O2 du périmètre de la maille M1. De même, le terminal mobile identifie le sommet 015 des mailles M12 et M11, le sommet 014 des mailles M11 et M10, et le sommet 013 des mailles M10 et M9, lesdits sommets O15, 014 et O13 étant situés, dans le plan (X,Y), sur le segment 0203. Et le terminal mobile identifie le sommet 012 des mailles M7 et M8, le sommet O11 des mailles M7 et M6, le sommet 010 des mailles M6 et M5 et le sommet 09 des mailles M5 et M4, lesdits sommets O12, O11 et O10 et 09 étant situés, dans le plan (X,Y), sur le segment 0304. Enfin le terminal mobile identifie le sommet 016 des mailles M3 et M2, qui est situé, dans le plan (X,Y), sur le segment O4O1.

Ces sommets identifiés sont nommés sommets additionnels de la maille M1.

Décomposition des mailles en triangles en strip :

Puis le terminal mobile décompose la maille M1 en triangles en « strip » tel que les sommets de ces triangles sont les sommets de la maille M1 et les sommets additionnels identifiés.

Dans le mode de réalisation considéré, en référence à la figure 8 la maille M1 est ainsi décomposée en l'ensemble des triangles en strip suivants : (O1, O17, O6), (O17, 06, O16), (O6, O16, O4), (O16, O4, 02) (04, 02, 09) (O2, O9, O15) (09, O15, O10) (O15, O10, 014) (O10, O14, O11) (O14, O11, 013) (O11, O13, O12) (O13, O12, O3).

Cet ensemble ordonné de triangles en « strip » est indiqué par la suite ordonnée $E_S$(M1 de sommets et sommets additionnels de la maille M1 : $E_{S1}$(M1) = {O1, O17, O6, O16, 04, 02, 09, O15, O10, O14, O11, O13, O12, O3}.

Cette suite ordonnée de sommets et sommets additionnels de la maille M1 est fournie à l'interface de programmation graphique du terminal mobile, qui trace, en fonction de cette liste ordonnée et des coordonnées tridimensionnelles de ces sommets et sommets additionnels précédemment transmises par le serveur, les 12 triangles indiqués ci-dessus. La maille M1 est ainsi tracée.

Les mêmes étapes sont ensuite effectuées pour le tracé des autres mailles de la représentation R de la surface.

Le tracé de la représentation R de surface tridimensionnelle tel que réalisé par le terminal mobile ne présente plus de trous au niveau des jonctions entre les mailles de tailles différentes.

Dans le mode de réalisation décrit ci-dessus, l'ensemble des sommets additionnels a été pris en compte pour le tracé de la maille M1, ce qui a pour effet de supprimer les trous à la jonction entre la maille M1 et les mailles pourvus de segments de périmètre adjacents M2 à M15. Dans un autre mode de réalisation, on ne prend en compte qu'un ou certains des sommets additionnels, ce qui a pour effet de diminuer le nombre de trous apparaissant à la jonction entre deux mailles de taille différente.

Dans un mode de mise en oeuvre, la décomposition, indiquée ci-dessus et mise en oeuvre par le terminal mobile, de la maille en triangles en strip de sommets les sommets de la maille M1 et les sommets additionnels identifiés, est réalisée à l'aide d'un algorithme basé sur les principes suivants : le point de départ étant le sommet O1 situé au nord-ouest de la maille M1, on identifie le sommet ou sommet additionnel le plus proche de O1 sur le segment du périmètre de la maille M1 reliant le sommet O1 au sommet 02 situé au nord-est de la maille M1. Une fois ce sommet additionnel O17 identifié, on identifie le sommet ou sommet additionnel le plus proche (06) de O1 sur le segment du périmètre de la maille M1 reliant le sommet O1 au sommet O4 situé au sud-ouest de la maille M1.

Le premier triangle en strip est alors identifié comme le triangle (O1, O17, O6).

Pour identifier le second triangle en strip dans l'ensemble ordonné de triangle, on identifie le sommet additionnel le plus proche de O17 (016) sur le segment du périmètre de la maille M1 reliant le sommet 017 au sommet 02 situé au nord-est de la maille M1.

Le second triangle en strip est alors identifié comme le triangle (O17, O6,O16).

Pour identifier le troisième triangle en strip dans l'ensemble ordonné de triangle, on identifie le sommet additionnel le plus proche de 06 (04) sur le segment du périmètre de la maille M1 reliant le sommet 06 au sommet 04 situé au nord-est de la maille M1.

Le troisième triangle en strip est alors identifié comme le triangle (O6,O16,O4).

Le quatrième triangle en strip identifié en mettant en oeuvre le même processus est (O16, O4, O2).

Une fois qu'un triangle en strip comporte comme sommets les sommets 04, 02 de la diagonale nordest/sud-ouest de la maille M1, on réitère le processus à partir du sommet 03 situé au sud-est de la maille M1 en remontant successivement vers le sommet 04 situé au sud-ouest de la maille M1 et vers le sommet 02 situé au nord-est de la maille M1, et cela jusqu'à ce qu'on identifie qu'un triangle en strip comporte comme sommets les sommets O4, O2 de la diagonale nord-est/sud-ouest de la maille M1.

Lorsqu'il qu'il n'y a pas le même nombre de sommets additionnels sur deux bords symétriques par rapport à l'axe (O1,O3), il se pourrait qu'on ne puisse identifier avec les principes ci-dessus de triangle en strip comportant comme sommets les sommets 04, 02.

Le principe supplémentaire suivant est ainsi posé : dès qu'un triangle en « strip » courant (triangle n) identifié comporte comme sommet un des sommets (04, 02) de la diagonale nord-est/sud-ouest de la maille M1, si le triangle en strip suivant identifié (triangle n+1) ne comporte pas comme sommet l'autre des sommets (04, 02), le triangle en strip identifié ensuite (triangle n+2) comportera deux des sommets du triangle n dont celui des sommets (04, 02) présent dans le triangle n et un nouveau sommet ou sommet additionnel déterminé sur le même segment du périmètre de la maille que le nouveau sommet déterminé pour le triangle n+1. S'il ne comporte pas comme sommet l'autre des sommets (04, 02), le triangle (n+3) sera déterminé similairement au triangle (n+2), et ainsi de suite jusqu'à ce que soit identifié un triangle comportant comme sommets 04 et 02.

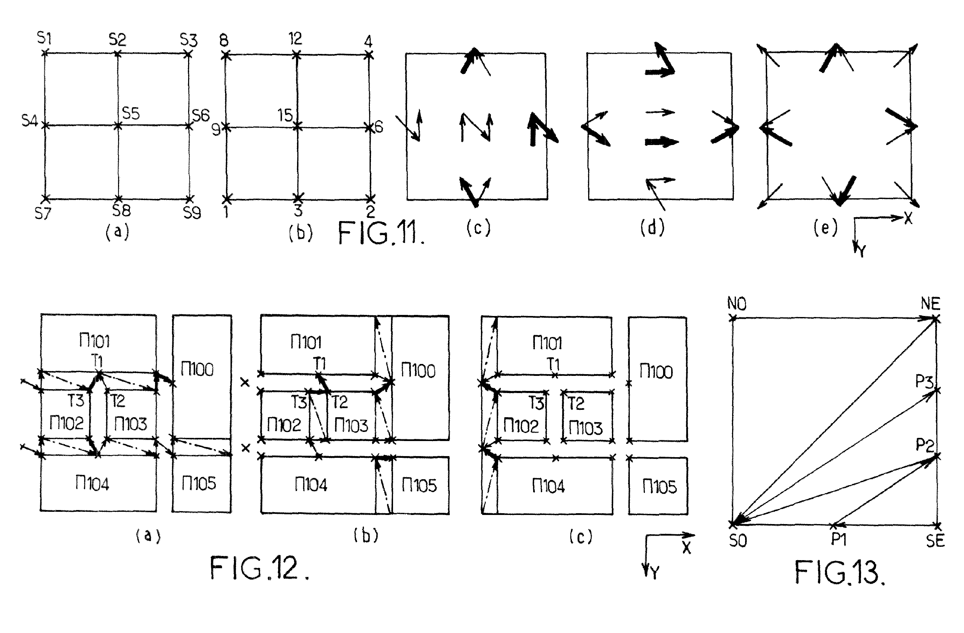

Par exemple, dans la configuration illustrée en figure 13, une maille comporte quatre sommets NO, NE, SE, SO et trois sommets additionnels P1, P2, P3. P1 est situé sur le segment SO-SE, tandis que P2 et P3 sont situés sur le segment NE-SE.

En partant du sommet NO, on identifie un premier triangle (NO,NE, SO).

On part alors du sommet SE et on identifie un triangle (SE, P1, P2). On identifie le triangle suivant (P1,P2, SO).Le triangle suivant est (P2, SO,P3). Le triangle suivant est le triangle (SO, P3,NE)

**Détermination et tracé d'une représentation d'une portion de modèle numérique de terrain avec zone de délimitation dans la représentation d'une portion d'un modèle numérique de terrain :**

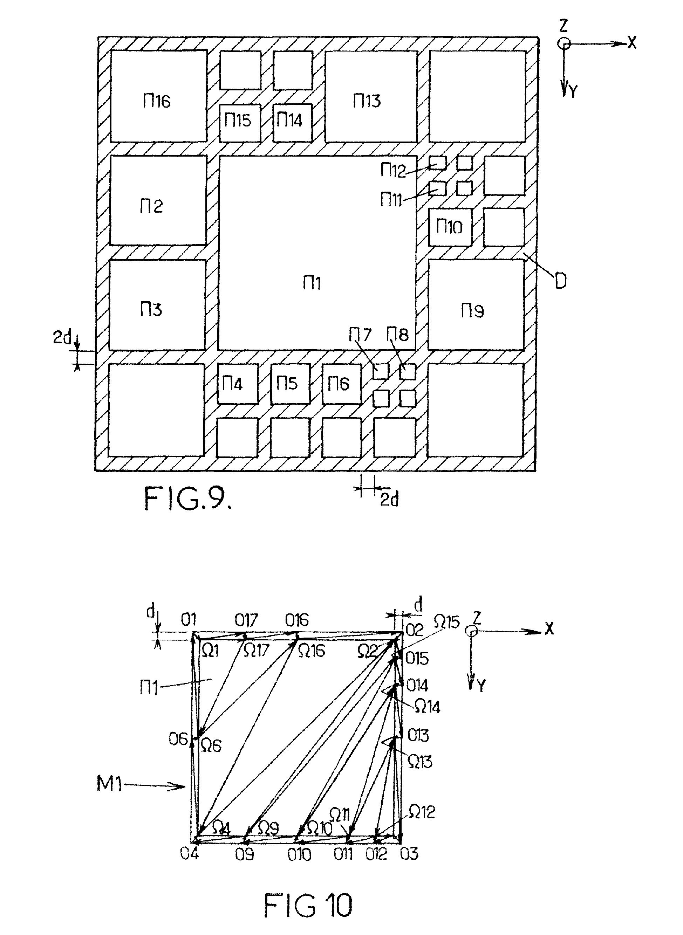

Afin d'améliorer la visualisation du relief de la portion de modèle numérique de terrain, le terminal mobile, dans un mode de réalisation, peut réaliser un traitement en vue d'obtenir, à partir des données de définition de la représentation transmises par le serveur, correspondant à celle illustrée en figure 7, une représentation telle qu'illustrée en figure 9 dans le plan (X, Y), comportant des mailles de tailles réduites par rapport aux précédentes mailles, et une zone de délimitation entre les mailles (hachurée sur la figure 8).

Néanmoins, le terminal mobile ne disposant pas de moyens de tracer des lignes, des techniques sont proposées ci-dessous pour, à partir de triangles en « strip » d'une part, réduire la taille des mailles, tracer ces mailles réduites, tracer la zone de délimitation, sans introduire de problèmes de jonction apparaissant sous forme de trous, entre les mailles réduites et la zone de délimitation.

Dans un mode de réalisation, à partir des données de définition des mailles transmise par le serveur pour la représentation R, le terminal mobile effectue la détermination des sommets additionnels comme décrite ci-dessus.

Puis, à partir des mailles indiquées dans les données de définition comprenant notamment les mailles M1 à M16 représentées en figure 7, le terminal mobile détermine des mailles de taille réduite, notamment $\Pi 1$ à $\Pi 16$ telles que représentées en figure 9 dans le plan (X,Y).

Réduction des mailles :

Les lignes, horizontales et verticales de la zone de délimitation souhaitée sont de largeur 2d.

Les opérations de réduction effectuée par le terminal mobile sont décrites ci-dessous pour la maille M1. Des opérations similaires sont réalisées pour l'ensemble des mailles indiquées dans les données de définition de la représentation R transmises par le serveur.

En référence à la figure 10, le terminal mobile détermine les sommets $\Omega 1$, $\Omega 2$, $\Omega 3$, $\Omega 4$ de la maille réduite $\Pi 1$ en fonction respectivement des sommets O1, 02, 03, 04 de la maille M1.

Dans un mode de réalisation, le terminal mobile détermine les coordonnées de ces sommets selon les axes X et Y de manière à ce que dans le plan (X,Y), la maille $\Pi 1$ de périmètre délimité par les segments $\Omega 1\Omega 2$, $\Omega 22\Omega 23$, $\Omega 3\Omega 4$, $\Omega 4$ $\Omega 1$, soit une maille carrée et que l'axe (O1,O2) soit distant de l'axe ($\Omega 1$, $\Omega 2$) d'une distance égale à d, l'axe (04,03) soit distant de l'axe ($\Omega 4$, $\Omega 3$) d'une distance égale à d, l'axe (O1,O4) soit distant de l'axe ($\Omega 1$, $\Omega 4$) d'une distance égale à d et l'axe (03,02) soit distant de l'axe ($\Omega 3$, $\Omega 2$) d'une distance égale à d. Dans le mode de réalisation considéré, la réduction d'une maille est donc réalisée dans une direction normale au contour de la maille.

En outre, le terminal mobile affecte à $\Omega 1$, $\Omega 2$, $\Omega 3$, $\Omega 4$ les mêmes coordonnées selon l'axe Z que celles respectivement du sommet O1, 02, 03, 04.

Ensuite, le terminal mobile détermine des sommets additionnels de la maille réduite $\Pi 1$ en fonction respectivement des sommets additionnels 06, 09, O10. O11, O12, O13, O14, O15, O16 et O17 de la maille M1.

Dans le mode de réalisation considéré en référence à la figure 10, les sommets additionnels $\Omega 6$, $\Omega 9$, $\Omega 10$, $\Omega 11$, $\Omega 12$, $\Omega 13$, $\Omega 14$, $\Omega 15$, $\Omega 16$ et $\Omega 17$ sont ainsi déterminés. Pour i=6, 9, 10 à 17, les coordonnées de $\Omega i$ selon les axes X et Z sont égales à celles du sommet Oi. Et si Oi est situé sur le segment (OkOj) du périmètre de la maille M1, la coordonnée selon l'axe Y de $\Omega i$ est égale à celle de la projection orthogonale du sommet additionnel Oi sur le segment ($\Omega k\Omega j$) du périmètre de la maille réduite $\Pi 1$.

Dans un autre mode de réalisation, chaque sommet additionnel Oi, pour i=6, 9, 10 à 17, de la maille M1 donne lieu à deux sommets additionnels sur la maille réduite $\Pi 1$, et non à un seul sommet additionnel. Les coordonnées de ces deux sommets additionnels selon l'axe Z sont égales à celle du sommet additionnel Oi. Les coordonnées selon les axes X et Y sont égales à celles des points d'intersection entre les axes passant par le sommet additionnel Oi inclinés de+/- 45° par rapport au segment OkOj du périmètre de la maille M1 sur lequel est situé Oi et le segment $\Omega k\Omega j$ du périmètre de la maille réduite $\Pi 1$.

Le terminal mobile effectue ensuite la décomposition de la maille réduite $\Pi 1$ en triangles en « strip », de manière similaire à celle décrite plus haut en référence à la maille M1. Cet ensemble de triangles en « strip » est défini par l'ensemble ordonné $E_{S1}(\Pi 1)$ de sommets et sommets additionnels de la maille réduite $\Pi 1$, où $E_{S1}(\Pi 1)$ = {$\Omega 1$, $\Omega 17$, $\Omega 6$, $\Omega 16$, $\Omega 04$, $\Omega 2$, $\Omega 9$, $\Omega 15$, $\Omega 10$, $\Omega 14$, $\Omega 11$, $\Omega 13$, $\Omega 12$, $\Omega 3$}.

Le tracé de la maille réduite $\Pi 1$ est ensuite effectué en fonction de ces triangles en « strip », en appliquant sur ces triangles la texture ou couleur associée à la maille M1 dans les données de définition transmises par le serveur au terminal mobile.

Une technique envisageable pour tracer la zone de délimitation serait que le terminal mobile trace d'une part les mailles réduites (notamment les mailles $\Pi i$, i=1 à 16) et d'autre part la maille d'origine (notamment les mailles Mi, i=1 à 16) de la manière indiquée ci-dessus, à l'aide des sommets et sommets additionnels de ces mailles respectives. Néanmoins une telle technique donne lieu à l'apparition de trous entre les mailles et la zone de délimitation. De plus, la zone de délimitation ne peut être tracée que suite au tracé des mailles réduites : il est impossible de ne dessiner que la zone de délimitation, sans les mailles réduites et leur texture.

Deux techniques sont proposées ci-dessous en vue du tracé par le terminal mobile de la zone de délimitation à partir de triangles en « strip », qui permettent de ne pas donner lieu à des trous de jonction entre des mailles de tailles différentes.

Ces techniques sont le tracé de la zone de délimitation par encadrement des mailles réduites et le tracé de la zone de délimitation par quadrillage des mailles réduites.

Tracé de la zone de délimitation par encadrement des mailles réduites.

Le principe de cette technique est de relier les sommets additionnels de la maille aux sommets additionnels correspondants de la maille réduite.

Les opérations effectuées par le terminal mobile sont décrites ci-dessous, en référence à la figure 10, pour la maille M1 et la maille réduite Π1 déterminée en fonction de la maille M1. Des opérations similaires sont réalisées pour l'ensemble des mailles indiquées dans les données de définition de la représentation R transmises par le serveur et des mailles réduites déterminées en fonction de ces mailles par le terminal mobile.

La partie de la zone de délimitation située correspondant à la portion de la maille M1 non incluse dans la maille réduite Π1 est décomposée en l'ensemble de triangles en « strip » suivant : $(01, \Omega 1, O17)$, $(\Omega 1, 017, \Omega 17)$, $(017, \Omega 17, 016)$, $(\Omega 17, O16, \Omega 16)$, $(O16, \Omega 16, 02)$, $(\Omega 16, 02, \Omega 2)$, $(02, \Omega 2, 015)$, $(\Omega 2, O15, \Omega 15)$, $(O15, \Omega 15, 014)$, $(\Omega 15, O14, \Omega 14)$, $(014, \Omega 14, 013)$, $(\Omega 14, O13, \Omega 13)$, $(O13, \Omega 13, 03)$, $(\Omega 13, O3, \Omega 3)$, $(O3, \Omega 3, 012)$, $(\Omega 3, 012, \Omega 12)$, $(O12, \Omega 12, O11)$, $(\Omega 12, O11, \Omega 11)$, $(011, \Omega 11, O10)$, $(\Omega 11, O10, \Omega 10)$, $(010, \Omega 10, 09)$, $(\Omega 10, 09, \Omega 9)$, $(09, \Omega 9, 04)$, $(\Omega 9, 04, \Omega 4)$, $(04, \Omega 4, 06)$, $(\Omega 4, 06, \Omega 6)$, $(06, \Omega 6, O1)$, $(\Omega 6, O1, \Omega 1)$, qui est aussi défini par l'ensemble ordonné de sommets $E_{S2}(M1) = \{O1, \Omega 1,$ $017, \Omega 17, O16, \Omega 16, 02, \Omega 2, O15, \Omega 15, O14, \Omega 14, O13,$ $\Omega 13, 03, \Omega 3, O12, \Omega 12, O11, \Omega 11, O10, \Omega 10, 09, \Omega 9,$ $04, \Omega 4, 06, \Omega 6, O1, \Omega 1\}$. Comme on le voit, les deux premiers sommets O1, $\Omega 1$ de l'ensemble sont dupliqués à la fin de la liste ordonnée de sommets afin de fermer la partie de la zone de délimitation considérée.

L'application graphique du terminal mobile trace ces triangles en « strip » en fonction de l'ensemble ordonné de sommets $E_{S2}(M1)$ et permet ainsi la visualisation de la partie de la zone de délimitation considérée.

Avec cette technique, les segments adjacents délimitant une maille réduite et la partie adjacente de zone de délimitation sont joints bord à bord. Il n'y a pas de trous au niveau de la jonction.

Les traitements pour le tracé de la zone de délimitation peuvent être intégrés dans la boucle des traitements pour le tracé des mailles réduites.

Cette technique est cependant consommatrice de ressources car elle nécessite de considérer dans les calculs un grand nombre de sommets et sommets additionnels, d'une part pour effectuer le traitement pour déterminer et tracer la maille réduite Π1 à partir de la maille M1, et d'autre part pour tracer la partie de la zone de délimitation correspondant à la zone entre la maille M1 et la maille réduite Π1. En outre, pour tracer cette partie de la zone de délimitation, il est nécessaire de considérer le double du nombre de sommets et sommets additionnels utilisés pour tracer la maille réduite. Par ailleurs, la zone de délimitation entre deux mailles réduites adjacentes est constituée de deux bandes, chacune de largeur d. Chacune de ces bandes correspond à une zone entre la maille d'origine et la maille réduite déterminée en fonction de cette maille d'origine.

Tracé de la zone de délimitation par quadrillage des mailles réduites.

Selon cette technique mise en oeuvre après réalisation par le terminal mobile des opérations de prise en compte de sommets additionnels et de réduction des mailles, on considère que le tracé de la zone de délimitation entre mailles réduites est constitué de trois composantes, qui sont les bords extérieurs, les lignes horizontales et les lignes verticales, et qui sont constituées de plusieurs polygones mis bout à bout.

Sur la figure 11 a sont représentées les différentes configurations que peut prendre un sommet d'une ou plusieurs mailles, telle qu'une des mailles représentées en figure 7. Un sommet peut être un sommet situé au nord-ouest, et/ou sud-ouest, et/ou nord-est et/ou sud-est d'une maille ou plusieurs mailles

Par exemple, en référence à la figure 7, le sommet O1 est à la fois le sommet nord-ouest de la maille M1, le sommet sud-ouest de la maille M5, le sommet nord-est de la maille M2 et le sommet sud-est de la maille M16.

Le terminal mobile est adapté pour affecter une valeur d'identificateur de type de sommet à chaque sommet de maille en fonction de sa configuration.

La valeur est initialisée à 0, puis si le sommet est le sommet au sud-ouest d'une maille, on ajoute 1 à la valeur. Si le sommet est le sommet au sud-est d'une maille, on ajoute 2. Si le sommet est le sommet au nord-est d'une maille, on ajoute 4. Si le sommet est le sommet au nord-ouest d'une maille, on ajoute 8.

Les sommets S1 à S9 ont chacun une configuration distincte. Ils représentent l'ensemble des configurations possibles.

Sur la figure 11b sont représentées les valeurs d'indicateur de type de sommet pour chacun de ces sommets S1 à S9. Par exemple, la valeur 8 correspond ainsi aux sommets de type le sommet S1 (seulement sommet nord-ouest d'une maille), la valeur 12 correspond ainsi au sommet de type le sommet S2 (sommet nord-ouest d'une maille et nord-est d'une maille).

Pour chacun des sommets S1 à S9 représentatifs des différents types de sommets, on prédéfinit des portions de polygones représentant une contribution respective aux polygones constituant les lignes horizontales, verticales et les bords extérieurs de la zone de délimitation, en fonction de la valeur d'indicateur de type de sommet qui leur est associée.

Ainsi la figure 11c représente une contribution aux lignes horizontales de chacun des sommets S1 à S9, la figure 11d représente une contribution aux lignes verticales de chacun des sommets S1 à S9, la figure 11e représente une contribution aux bords extérieurs de chacun des sommets S1 à S9.

Les traits fins sur les figures 11c à 11e correspondent au commencement d'un polygone (ou prolongent un polygone courant). Les traits en gras terminent le polygone courant.

Le terminal mobile est adapté pour déterminer la valeur de l'identificateur de type de sommet de chaque sommet d'une maille identifiée dans les données de configuration transmise par le serveur, et comme représenté en figure 12a, en vue du tracé des lignes horizontales par exemple en déduire sa contribution à la construction des lignes horizontales de la zone de délimitation en fonction de la valeur de l'indicateur déterminée pour le sommet et de la contribution prédéfinie pour ladite valeur (cf. figures 11b et 11c).

Similairement, comme représenté en figure 12b, en vue du tracé des lignes verticales de la zone de délimitation, le terminal mobile déduit, pour chaque sommet identifié dans les données de configuration transmise par le serveur, une contribution à la construction des lignes verticales de la zone de délimitation, en fonction de la valeur de l'indicateur déterminée pour le sommet et de la contribution prédéfinie pour ladite valeur (cf. figures 11b et 11d).

Et comme représenté en figure 12c, en vue du tracé des bords extérieurs de la zone de délimitation, le terminal mobile déduit, pour chaque sommet identifié dans les données de configuration transmise par le serveur, une contribution à la construction des bords extérieurs de la zone de délimitation, en fonction de la valeur de l'indicateur déterminée pour le sommet et de la contribution prédéfinie pour ladite valeur (cf. figures 11b et 11e).

Les portions de polygones ainsi déterminées joignent entre eux de deux à quatre sommets ou sommets additionnels de mailles réduites. Ces sommets ou sommets additionnels joints par une portion de polygone sont déterminés, lors des opérations de réduction de mailles, en fonction d'un même sommet d'une maille considérée avant réduction, et pour lequel l'identificateur de type de sommet a été calculé.

Par exemple, en référence à la figure 12a représentant les mailles réduites Π100 à Π105, le sommet additionnel T1 de la maille réduite Π101 et les sommets T2 et T3 des mailles réduites Π102 et n103 ont été déterminés, de la manière décrite plus haut en référence aux opérations de détermination de sommets additionnels et de réduction, en fonction d'un même sommet T (non représenté) commun aux deux mailles à partir desquelles ont été déterminées les mailles réduites Π102 et Π103.

Les différentes portions de polygones sont ensuite jointes à l'aide de segments supplémentaires (représentés par une succession de tirets long et courts).

Cette technique permet ainsi de décomposer les lignes horizontales, verticales et les bords extérieurs en des ensembles de triangles en « strip ». Suite à la fourniture à l'interface graphique des listes ordonnées de sommets et sommets additionnels indiquant les sommets des triangles en « strip », cette dernière trace la zone de délimitation. Une telle technique permet de ne pas présenter de trous entre la zone de délimitation et les mailles.

Cette technique ne permet pas d'intégrer les traitements pour le tracé de la zone de délimitation dans la boucle des traitements pour le tracé des mailles réduites. Toutefois, elle nécessite moins de calculs faisant intervenir les sommets et sommets additionnels que la technique par encadrement de dalles, même si la complexité du traitement est plus grande.

Dans les modes de réalisation considérés en référence aux dessins, les mailles considérées sont carrées dans le plan (X, Y). Néanmoins, l'invention peut être mise en oeuvre avec des mailles de forme diverse. En outre, des mailles d'une même surface peuvent ne pas être de même forme dans le plan (X, Y), par exemple certaines peuvent être parallélépipédiques, d'autres octogonales etc.

Les étapes décrites ci-dessus ont été décrites en référence à une décomposition en triangles en « strip ». Ces étapes peuvent néanmoins être mises en oeuvre pour tout autre type de décomposition en triangles par exemple, une décomposition par 3 ou en « fan ».

## Revendications

1. Procédé mis en oeuvre dans un terminal comportant des moyens de traitement pour tracer, selon des axes X, Y et Z, une surface tridimensionnelle comportant des mailles (M1) définies par des sommets respectifs (O1, O2, O3, 04), un périmètre d'une maille étant délimité par des segments reliant successivement lesdits sommets, ledit procédé comprenant les étapes suivantes :

   a/ pour au moins une première maille (M1), on détermine au moins un sommet additionnel (06), ledit sommet additionnel étant un sommet d'une seconde maille (M2), distinct des sommets de la première maille, tel que dans le plan défini par les axes X et Y, le sommet de la deuxième maille est situé sur le périmètre de la première maille ;

b/ on décompose au moins une partie de la première maille en au moins un ensemble ordonné de triangles, les sommets desdits triangles étant déterminés en fonction des sommets de la première maille et du sommet additionnel;

c/ on trace la surface au moyen d'une interface graphique du terminal en fonction d'au moins lesdits triangles de l'ensemble ordonné de triangles.

2. Procédé selon la revendication 1, selon lequel chaque triangle de l'ensemble ordonné de triangles, à compter du deuxième triangle selon l'ordre de l'ensemble ordonné de triangles, comporte deux sommets du triangle précédent et un nouveau sommet distinct des sommets des triangles précédents.

3. Procédé selon la revendication 1 ou 2, comprenant en outre les étapes suivantes :

- on détermine une pluralité de sommets additionnels (06, O17) de la première maille (M1), lesdits sommets additionnels étant les sommets des mailles de la surface vérifiant les contraintes indiquées à l'étape a/ ; et

- les sommets des triangles de l'ensemble ordonné de triangles étant déterminés en fonction des sommets de la première maille et des sommets additionnels déterminés de la première maille.

4. Procédé selon l'une des revendications précédentes, selon lequel on définit une première maille réduite (Π1) en fonction de la première maille, en mettant en oeuvre les étapes suivantes :

- pour chaque sommet (02) de la première maille, on définit, en fonction dudit sommet de la première maille, un sommet respectif (Ω2) de la première maille réduite (Π1) telle que, dans le plan défini par les axes X et Y, la première maille réduite est strictement contenue dans la première maille ;

- pour au moins un sommet additionnel (06) de la première maille situé sur un segment du périmètre reliant un premier (O1) et un second (04) sommets de la première maille, on définit au moins un sommet additionnel (Ω6) respectif de la première maille réduite en fonction dudit sommet additionnel de la première maille, situé, dans le plan défini par les axes X et Y, sur le segment du périmètre reliant les deux sommets (Ω1,Ω4) de la première maille réduite (Π1) définis respectivement pour les premier et second sommets de la première maille ;

- puis on décompose ladite maille réduite (Π1) en un ensemble ordonné de triangles, les sommets des triangles dudit ensemble comprenant les sommets et sommets additionnels de la maille de taille réduite; et

- on trace la surface en fonction d'au moins lesdits triangles du premier ensemble ordonné de triangles.

5. Procédé selon la revendication 4, comprenant en outre les étapes suivantes:

- on décompose une portion de surface tridimensionnelle située entre la première maille (M1) et la première maille réduite (Π1) en un autre ensemble ordonné de triangles, chaque sommet ou sommet additionnel de la première maille et de la première maille réduite étant le sommet d'au moins un triangle dudit autre ensemble ordonné de triangles ;

- on trace ladite portion de surface tridimensionnelle en fonction d'au moins lesdits triangles de l'ensemble ordonné de triangles et de l'autre ensemble ordonné de triangles.

6. Procédé selon la revendication 5, selon lequel chaque triangle de l'autre ensemble ordonné de triangles, à compter du deuxième triangle, comporte deux sommets du triangle précédent et, jusqu'à l'antépénultième triangle selon l'ordre de l'ensemble ordonné de triangles, un nouveau sommet distinct des sommets des triangles précédents, les sommets de chaque triangle étant des sommets ou sommets additionnels de la première maille et de la maille réduite, chaque triangle comportant un sommet égal à un sommet ou sommet additionnel de la première maille et un autre sommet égal au sommet ou sommet additionnel de la première maille réduite défini en fonction dudit sommet ou sommet additionnel de la première maille.

7. Procédé selon la revendication 4, selon lequel on trace une portion de surface tridimensionnelle située entre des mailles réduites (Π101, Π102) définies à partir de mailles respectives en décomposant ladite portion en un ensemble de polygones reliant les sommets et sommets additionnels des mailles réduites en mettant en oeuvre les étapes suivantes :

- on affecte une valeur à un sommet d'une maille en fonction de la configuration du sommet par rapport à la maille et on met à jour ladite valeur en fonction de la configuration du sommet par rapport à une ou plusieurs autres mailles lorsque ledit sommet est en outre un sommet de ladite ou lesdites autres mailles ;

- on identifie un sommet (T2, T3) de chacune de N mailles réduites (Π102, Π1013), avec N entier compris entre 2 et 4, lesdits N sommets ayant été définis en fonction d'un sommet commun aux N mailles en fonction desquelles ont été définies les N mailles réduites et on détermine ledit ensemble de polygones en fonction au moins de portions de polygone reliant lesdits N sommets des N mailles réduites et déterminées en fonction de la valeur affectée au sommet commun.

**8.** Procédé selon la revendication 4 ou 7, selon lequel on trace une portion de surface tridimensionnelle située entre des mailles réduites définies en fonction de mailles en décomposant ladite portion en un ensemble de polygones reliant les sommets ou sommets additionnels des mailles réduites, en mettant en oeuvre les étapes suivantes :

> - on affecte une valeur à un sommet d'une maille en fonction de la configuration du sommet par rapport à la maille et on met à jour ladite valeur en fonction de la configuration du sommet par rapport à une ou plusieurs autres maille lorsque ledit sommet est en outre un sommet de ladite ou lesdites autres mailles ;
> - on identifie un sommet additionnel (T1) d'une maille réduite ($\Pi$101) et un sommet (T2, T3) de chacune de N-1 mailles réduites ($\Pi$102, $\Pi$1013), avec N entier compris entre 2 et 4, lesdits sommet additionnel et N-1 sommets ayant été définis en fonction d'un sommet commun aux N-1 mailles en fonction desquelles ont été définies lesdites N-1 mailles réduites et on détermine ledit ensemble de polygones en fonction au moins de portions de polygones reliant ledit sommet additionnel et lesdits N sommets des mailles réduites et déterminées en fonction de la valeur affectée au sommet commun.

**9.** Terminal adapté pour mettre en oeuvre les étapes d'un procédé selon l'une quelconque des revendications 1 à 8.

**10.** Programme d'ordinateur à installer dans un terminal, ledit programme comprenant des instructions pour mettre en oeuvre les étapes d'un procédé selon l'une des revendications 1 à 8 lors d'une exécution du programme par des moyens de traitement dudit terminal.

FIG.1.
ART ANTÉRIEUR

$S(1,1,z_{11})$

$S(n_{max},1,z_{n_{max}})$

$S(1,m_{max},z_{1_{m_{max}}})$

$S(n_{max},m_{max},z_{max,m_{max}})$

$S(n,m,z_{n,m})$

M

$S(n+1,m,z_{n+1,m})$

FIG.2.
ART ANTÉRIEUR

$S(n,m+1,z_{n+1,m+1})$

$S(n+1,m+1,z_{n+1,m+1})$

(a)

(b)

(c)

FIG.3.
ART ANTÉRIEUR

FIG.4.
ART ANTÉRIEUR

FIG.7.
ART ANTÉRIEUR

FIG.8.

FIG.5.

FIG.6.

FIG.9.

FIG 10

FIG.11.

FIG.12.

FIG.13.

Europäisches
Patentamt

European
Patent Office

Office européen
des brevets

# RAPPORT DE RECHERCHE EUROPEENNE

Numéro de la demande

EP 08 17 3122

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | TAYLOR D C ET AL: "An algorithm for continuous resolution polygonalizations of a discrete surface" PROCEEDINGS/COMPTE RENDU GRAPHICS INTERFACE, XX, XX, 18 mai 1994 (1994-05-18), pages 33-42, XP002113898 * abrégé; figures 1,5 * * page 40, Encadrement "Continuous Resolution Rendering Algorithm" * * section 2 "Hierarchical Polygonalization of Discrerte Surface" * ----- | 1-10 | INV. G06T17/20 |
| A | PAJAROLA R.: "Overview of Quadtree-based Terrain Triangulation and Visualisation" UCI-ICS TECHNICAL REPORT, no. 02-01, 2002, XP002493844 Departament of Information & Computer Science, University of California, Irvine ----- | | |
| A | PAJAROLA R ET AL: "QuadTIN: quadtree based triangulated irregular networks" VIS 2002. IEEE VISUALIZATION 2002. PROCEEDINGS. BOSTON, MA, OCT. 27 - NOV. 1, 2002; [ANNUAL IEEE CONFERENCE ON VISUALIZATION], NEW YORK, NY : IEEE, US, 27 octobre 2002 (2002-10-27), pages 395-402, XP010633318 ISBN: 978-0-7803-7498-0 ----- | | DOMAINES TECHNIQUES RECHERCHES (IPC) G06T |
| A | BERN M., EPPSTEIN D.: "Mesh Generation and Optimal Triangulation"[Online] 1995, XP002493845 University of California Extrait de l'Internet: URL:http://www.ics.uci.edu/~eppstein/pubs/ BerEpp-CEG-95.pdf> [extrait le 2008-08-25] ----- | | |

Le présent rapport a été établi pour toutes les revendications

| Lieu de la recherche | Date d'achèvement de la recherche | Examinateur |
|---|---|---|
| La Haye | 3 mars 2009 | Blaszczyk, Marek |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
................................................................
& : membre de la même famille, document correspondant

EPO FORM 1503 03.82 (P04C02)

**RÉFÉRENCES CITÉES DANS LA DESCRIPTION**

**Documents brevets cités dans la description**

- FR 0652812